(19) **Europäisches Patentamt**

**European Patent Office**

**Office européen des brevets**

(11) **EP 1 057 159 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **99907534.4**

(22) Anmeldetag: **10.02.1999**

(51) Int Cl.⁷: **G08G 1/16**, B60K 31/00

(86) Internationale Anmeldenummer:
**PCT/EP99/00880**

(87) Internationale Veröffentlichungsnummer:
**WO 99/42973 (26.08.1999 Gazette 1999/34)**

(54) **VERFAHREN ZUR VERHINDERUNG EINER KOLLISION EINES FAHRZEUGS MIT EINEM VOR DEM FAHRZEUG ANGEORDNETEN HINDERNIS UND BREMSVORRICHTUNG**

METHOD FOR PREVENTING THE COLLISION OF A VEHICLE WITH AN OBSTACLE LOCATED IN FRONT OF THE VEHICLE AND BRAKING DEVICE

PROCEDE POUR EVITER LA COLLISION D'UN VEHICULE AVEC UN OBSTACLE SITUE DEVANT LE VEHICULE ET DISPOSITIF DE FREINAGE

(84) Benannte Vertragsstaaten:
**DE ES FR GB IT SE**

(30) Priorität: **18.02.1998 DE 19806687**

(43) Veröffentlichungstag der Anmeldung:
**06.12.2000 Patentblatt 2000/49**

(73) Patentinhaber: **DaimlerChrysler AG**
**70567 Stuttgart (DE)**

(72) Erfinder:
• **FRIEDERICH, Michael**
**D-73547 Lorch (DE)**
• **HARTLIEB, Markus**
**D-72141 Walddorfhäslach (DE)**
• **KRÖGER, Harald**
**D-70372 Stuttgart (DE)**
• **SPAUDE, Heinz-Werner**
**D-72631 Aichtal (DE)**

(56) Entgegenhaltungen:
EP-A- 0 473 866     DE-A- 4 244 183
GB-A- 2 081 484     GB-A- 2 153 124
US-A- 4 073 359

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft zunächst ein Verfahren zur Verhinderung einer Kollision eines Fahrzeugs mit einem vor dem Fahrzeug angeordneten Hindernis, vorzugsweise einem vor dem Fahrzeug fahrenden weiteren Fahrzeug, bei dem man den Abstand zwischen dem Fahrzeug und dem Hindernis, die Differenz der Geschwindigkeiten des Fahrzeugs und des Hindernis (Relativgeschwindigkeit) sowie die Geschwindigkeit und Beschleunigung oder Verzögerung des Fahrzeugs erfaßt und abhängig hiervon einen Kollisionshinweis und/oder einen Bremsvorgang auslöst.

Ein derartiges Verfahren geht beispielsweise aus der US 4 073 359 hervor. Dabei wird aus den von den Sensoren erfaßten Daten im wesentlichen ermittelt, ob das sich mit der gemessenen Geschwindigkeit und Verzögerung bewegende Fahrzeug noch vor dem Hindernis, d.h. innerhalb einer Distanz, die kleiner ist als der Abstand zwischen dem Fahrzeug und dem Hindernis, zum Stillstand kommen kann. Ist dies nicht der Fall, wird eine bevorstehende Kollision signalisiert.

Hierbei werden jedoch weder fahrzeugrelevante Daten, wie beispielsweise der Beladungszustand noch umgebungsrelevante Daten, wie beispielsweise der Fahrbahnzustand berücksichtigt. Es wird darüber hinaus auch nicht berücksichtigt, in welchem Fahrzustand sich das Fahrzeug befindet.

Es hat sich in der Vergangenheit insbesondere gezeigt, daß bei schweren Nutzfahrzeugen, beispielsweise Lastzügen, Sattelfahrzeugen oder auch bei Bussen der Auffahrunfall auf einen vorausfahrenden Lastkraftwagen beim Kolonnenfahren auf der Autobahn die häufigste Unfallart ist. Dabei finden laut repräsentativer Statistiken in ca. 40 % dieser Unfälle keinerlei Bremsmanöver statt. Auch bei Reisebussen führen Auffahrunfälle auf Autobahnen oft zu zahlreichen Verletzten oder Getöteten. Auch in diesem Falle erfolgt laut repräsentativer Statistiken in ca. 30 % der Unfälle kein Bremsmanöver. Die Ursache hierfür ist insbesondere darin zu sehen, daß haltende oder langsam fahrende Fahrzeuge aus Unachtsamkeit, Müdigkeit o.dgl. vom Fahrer übersehen oder nicht erkannt werden. Eine weitere Unfallursache ist eine nicht angepaßte Eigengeschwindigkeit bei schlechter Sicht oder Dunkelheit. Weitere Unfallursachen sind darin zu sehen, daß ein Überholvorgang nicht möglich ist, wenn beispielsweise die Überholspur besetzt ist, oder daß die Geschwindigkeit insbesondere von am Berg vorausfahrenden Fahrzeugen falsch eingeschätzt wird, oder daß der vorgeschriebene Sicherheitsabstand aufeinanderfolgender Fahrzeuge nicht eingehalten wird.

In vielen Fällen führen Bremsmanöver in Kolonnen darüber hinaus zu einem sogenannten Ziehharmonika-Effekt, welcher zur Folge hat, daß den Führern weiterer nachfolgender Fahrzeuge mit zunehmender Fahrzeugentfernung von dem ersten bremsenden Fahrzeug weniger Reaktions- und Bremsweg zur Verfügung steht.

Aus der DE 42 44 183 C2 geht eine Vorrichtung zur Beurteilung einer möglichen Kollision eines Fahrzeugs mit einem Hindernis hervor, mittels der vorausschauend der Bewegungsweg des Fahrzeugs und der Bewegungsweg des Hindernisses abgeschätzt werden und bei Gefahr einer Kollision eine der Gefahr der Kollision entgegenwirkende Einrichtung im Fahrzeug ausgelöst wird. Dabei wird vorausberechnet, welche Position das Fahrzeug und welche Position das Hindernis nach Ablauf eines vorgebbaren Zeitintervalls einnehmen würden. Die der Gefahr der Kollision entgegenwirkende Einrichtungen sind eine Alarmeinrichtung sowie ein Hydraulikerzeuger, mittels dessen die Bremsen des Fahrzeugs betätigbar sind. Diese Vorrichtung läßt die Fahreraktivität des Fahrzeugführers unberücksichtigt. Die Betätigung der Alarmeinrichtung sowie die Betätigung des Hydraulikerzeugers in einem kritischen Zustand findet selbst dann statt, wenn beispielsweise der Fahrer bereits Gegenmaßnahmen zur Verhinderung einer Kollision ergriffen hat.

Der Erfindung liegt daher das Problem zugrunde, ein Verfahren zur Verhinderung einer Kollision eines Fahrzeugs mit einem vor dem Fahrzeug angeordneten Hindernis, vorzugsweise einem vor dem Fahrzeug herfahrenden weiteren Fahrzeug der gattungsgemäßen Art derart weiterzubilden, daß insbesondere beim Kolonnenfahren ein Kollisionshinweis oder ein Bremsvorgang erst dann ausgelöst werden, ab dem eine Kollision bzw. ein Auffahrunfall weder durch Bremsen noch durch Vorbeilenken des Fahrzeugs an dem Hindernis vermieden werden können. Das Verfahren soll insbesondere auch die Aktivität des Fahrers, d.h. in einem Gefahrenzustand bereits eingeleitete Gegenmaßnahmen und dgl. berücksichtigen.

Dieses Problem wird bei einem Verfahren zur Verhinderung einer Kollision eines Fahrzeugs mit einem vor dem Fahrzeug angeordneten Hindernis der eingangs beschriebenen Art erfindungsgemäß dadurch gelöst, daß man zusätzlich zu den oben erfaßten Signalen die Fahreraktivität, insbesondere die Gaspedalbetätigung und/oder die Bremspedalbetätigung und/oder die Betätigung des Fahrtrichtungsanzeigers und/oder den Lenkwinkeleinschlag, den Zustand der Fahrbahn, den Beladungszustand sowie den Überdeckungsgrad des Fahrzeugs relativ zu dem Hindernis erfaßt und hieraus einen ersten Abstand zwischen dem Fahrzeug und dem Hindernis berechnet, der mindestens erforderlich ist, um durch einen Bremsvorgang mit maximaler Verzögerung eine Kollision mit dem Hindernis vermeiden zu können, daß man einen zweiten Abstand berechnet, der mindestens erforderlich ist, um durch Vorbeilenken des Fahrzeugs an dem Hindernis eine Kollision mit dem Hindernis vermeiden zu können und daß man einen automatischen Bremsvorgang nur dann einleitet, wenn der erfaßte Abstand sowohl kleiner als der erste als auch kleiner als der zweite berechnete Abstand ist.

Wenn eine Fahreraktivität vorliegt, kann der Bremsvorgang bei einem kleineren erfaßten oder Istabstand eingeleitet werden. Eine vorteilhafte Ausführungsform des Verfahrens sieht dabei vor, daß der erste Abstand zwischen dem Fahrzeug und dem Hindernis und der zweite Abstand, der erforderlich ist, um durch Vorbeilenken des Fahrzeugs an dem Hindernis eine Kollision mit dem Hindernis vermeiden zu können, um ein vorgebbares Maß verkleinert werden, wenn

a) die Fahrzeuge noch halb überdecken, oder
b) der Fahrtrichtungsanzeiger betätigt und das Gaspedal bis zu einem vorgebbaren Schwellenwert betätigt werden, oder
c) der Fahrtrichtungsanzeiger betätigt wird und ein vorgegebener Lenkwinkel überschritten wird, oder
d) das Bremspedal bis zu einem vorgebbaren Schwellenwert betätigt wird.

In allen diesen Fällen liegt eine Fahreraktivität vor, die darauf schließen läßt, daß der Fahrer entweder einen kritischen Fahrzustand durch eigene Aktivitäten beseitigt, oder überhaupt kein kritischer Fahrzustand vorliegt.

Vorzugsweise bremst man dabei das Fahrzeug mit maximaler Verzögerung solange ab, bis die Relativgeschwindigkeit den Wert Null annimmt.

Des weiteren kann vorteilhafterweise vorgesehen sein, daß vor Einleitung des automatischen Bremsvorgangs die Bremsleuchten des Fahrzeugs eingeschaltet werden. Hierdurch wird der Führer eines nachfolgenden Fahrzeugs frühzeitig auf die Einleitung des zur Beseitigung des kritischen Fahrzustands erforderlichen Bremsmanövers hingewiesen.

Das erfindungsgemäße Problem wird darüber hinaus auch noch durch eine Bremsvorrichtung für ein Fahrzeug gelöst, umfassend wenigstens einen Sensor zur Erfassung der Geschwindigkeit und der Beschleunigung/Verzögerung des Fahrzeugs, wenigstens einen Sensor zur Erfassung des Abstands zwischen dem Fahrzeug und einem vor dem Fahrzeug angeordneten Hindernis, vorzugsweise einem vor dem Fahrzeug herfahrenden weiteren Fahrzeug, und der Differenz der Geschwindigkeiten des Fahrzeugs und des Hindernisses (Relativgeschwindigkeit) sowie eine zentrale Steuereinheit, welche abhängig von den von den Sensoren erfaßten Signalen selbsttätig eine Bremse betätigt, wobei des weiteren wenigstens ein Sensor zur Erfassung der Fahreraktivität, insbesondere zur Erfassung der Gaspedalbetätigung und/oder der Bremspedalbetätigung und/oder der Betätigung des Fahrtrichtungsanzeigers und/oder des Lenkwinkeleinschlags, wenigstens ein Sensor zur Erfassung des Überdeckungsgrads des Fahrzeugs relativ zu dem Hindernis, wenigstens ein Sensor zur Erfassung des Beladungszustands und wenigstens ein Sensor zur Erfassung des Straßenzustands vorgesehen sind, deren Ausgangssignale der zentralen Steuereinheit zur Auslösung eines Bremsvorgangs und Berechnung einer maximalen Bremsverzögerung in Abhängigkeit von den von den Sensoren ausgegebenen Signalen zugeführt werden, wenn der von den Sensoren zur Erfassung des Abstands zwischen dem Fahrzeug und dem vor dem Fahrzeug angeordneten Hindernis erfaßte Abstand sowohl kleiner ist als sein erster berechneter Abstand zwischen dem Fahrzeug und dem Hindernis, der mindestens erforderlich ist, um durch einen Bremsvorgang mit maximaler Verzögerung eine Kollision des Fahrzeugs mit dem Hindernis vermeiden zu können, als auch kleiner ist als ein zweiter berechneter Abstand, der mindestens erforderlich ist, um durch Vorbeilenken des Fahrzeugs an dem Hindernis eine Kollision des Fahrzeugs mit dem Hindernis vermeiden zu können und wenn der durch die Sensoren zur Erfassung des Überdeckungsgrads erfaßte Überdeckungsgrad eine vorgegebene Schwelle überschreitet.

Bei einer vorteilhaften Ausführungsform ist vorgesehen, daß der wenigstens eine Sensor zur Erfassung des Abstands und der Relativgeschwindigkeit zwischen dem Fahrzeug und einem vor dem Fahrzeug angeordneten Hindernis und der wenigstens eine Sensor zur Erfassung des Überdeckungsgrads zwei an der Vorderseite des Fahrzeugs beabstandet angeordnete Radarsensoren sind. Diese Radarsensoren können dabei auf besonders vorteilhafte Weise gleichzeitig die Funktion des Sensors zur Erfassung des Abstands und der Relativgeschwindigkeit sowie des Sensors zur Erfassung des Überdedckungsgrads übernehmen.

Um insbesondere ein sehr schnelles Ansprechverhalten der Bremse zu ermöglichen, ist als Bremse vorteilhafterweise eine elektronisch ansteuerbare Druckluftbremse vorgesehen.

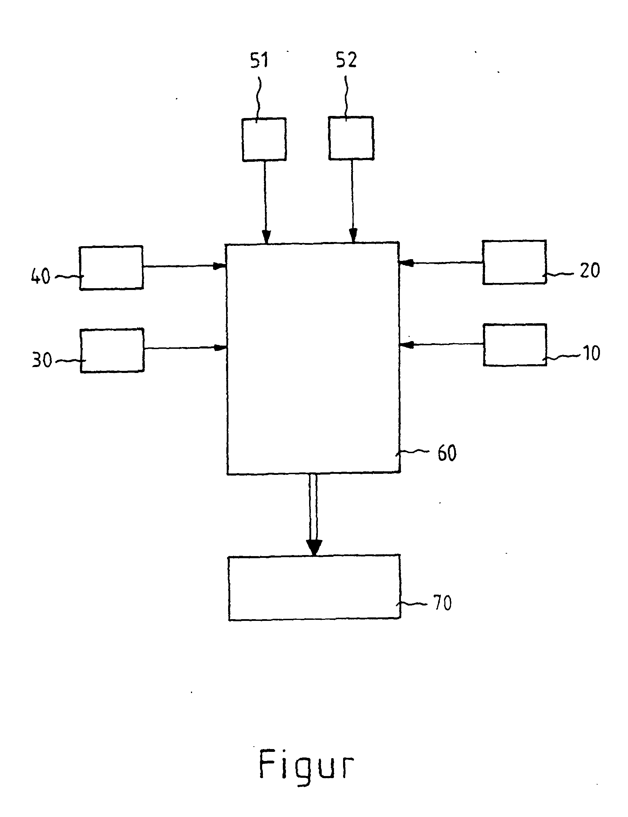

Weitere Merkmale und Vorteile der Erfindung sind Gegenstand der nachfolgenden Beschreibung sowie der zeichnerischen Darstellung eines Ausführungsbeispiels. In der Figur ist schematisch eine von der Erfindung Gebrauch machende Bremsvorrichtung dargestellt.

Eine Bremsvorrichtung für ein (nicht dargestelltes) Fahrzeug, schematisch in der Figur dargestellt, umfaßt einen Sensor 10 zur Erfassung der Geschwindigkeit und Beschleunigung/Verzögerung des Fahrzeugs, einen oder mehrere Sensoren 20 zur Erfassung der Fahreraktivität, d.h. zur Erfassung der Gaspedalbetätigung und/oder der Bremspedalbetätigung und/oder der Betätigung des Fahrtrichtungsanzeigers, und/oder des Lenkwinkels, ferner einen Sensor 30 zur Erfassung des Beladungszustands, einen Sensor 40, der den Straßenzustand erfaßt, sowie objekterfassende Sensoren 51, 52 zur Erfassung des Abstands des Fahrzeugs zwischen dem Fahrzeug und einem vor dem Fahrzeug angeordneten Hindernis, beispielsweise einem vor dem Fahrzeug herfahrenden weiteren Fahrzeug, zur Erfassung der Differenz der Geschwindigkeiten des Fahrzeugs und des vor dem Fahrzeug herfahrenden weiteren Fahrzeugs (Relativgeschwindigkeit) sowie zur Erfassung des Überdeckungsgrads. Die objekterfassenden Sensoren 51, 52 sind beispielsweise an der Vorderseite des Fahrzeugs beabstandet voneinander angeordnete Radarsensoren.

Die Ausgangssignale sämtlicher Sensoren werden einer zentralen Steuer- und Recheneinheit 60 zugeführt, durch welche eine Druckluft-Fahrzeugbremse 70 betätigbar ist.

Abhängig von den von den Sensoren erfaßten Signalen wird immer dann ein automatischer Bremsvorgang ausgelöst, d.h. die Druckluft-Fahrzeugbremse 70 angesteuert, wenn eine Kollision mit dem vor dem Fahrzeug herfahrenden weiteren Fahrzeug oder eine Kollision mit einem anderen Hindernis nicht mehr vermieden werden kann.

Im folgenden wird ein Verfahren zur Verhinderung einer Kollision eines Fahrzeugs mit einem vor dem Fahrzeug angeordneten Hindernis, beispielsweise einem vor dem Fahrzeug herfahrenden weiteren Fahrzeug durch Einleitung eines automatischen Bremsvorgangs in Verbindung mit der in der Figur schematisch dargestellten Bremsvorrichtung beschrieben. Es wird mittels des Sensors 10 die Geschwindigkeit und die Beschleunigung/Verzögerung des Fahrzeugs erfaßt und der zentralen Steuereinheit 60 zugeführt. Des weiteren werden mittels des Sensors 30 der Beladungszustand und mittels des Sensors 40 der Straßenzustand erfaßt, beispielsweise wird erfaßt, ob die Straße trocken oder feucht ist, wie ihre Oberflächenbeschaffenheit ist und dgl. und der zentralen Steuereinheit 60 zugeführt. Mittels des Sensors 20 wird ferner der Lenkwinkel, beispielsweise durch Potentiometer oder berührungslose Drehwinkelsensoren oder dgl. erfaßt und der Steuereinheit 60 zugeführt. Darüber hinaus werden durch die beiden objekterfassenden Sensoren 51 und 52 die Relativgeschwindigkeit, der Abstand und der Überdeckungsgrad zwischen dem Fahrzeug und dem vor dem Fahrzeug herfahrenden weiteren Fahrzeug erfaßt und der Steuereinheit 60 zugeführt.

Mit Hilfe der Recheneinheit 60 wird festgelegt, ob der Überdeckungsgrad eine vorgegebene Grenze überschreitet, d.h. ob die beiden Fahrzeuge im wesentlichen mittig hintereinander fahren. In diesem Falle kann davon ausgegangen werden, daß es sich bei dem Fahrzustand des Fahrzeugs um ein Kolonnenfahren handelt.

Darüber hinaus wird in der zentralen Steuereinheit 60 ein erster Abstand D_brems zwischen dem Fahrzeug und dem vor dem Fahrzeug herfahrenden weiteren Fahrzeug berechnet, der mindestens erforderlich ist, um durch einen Bremsvorgang mit maximaler Verzögerung eine Kollision des Fahrzeugs mit dem vor dem Fahrzeug herfahrenden weiteren Fahrzeug vermeiden zu können. Es wird ein zweiter Abstand D_lenk berechnet, der mindestens erforderlich ist, um durch Vorbeilenken des Fahrzeugs an dem vor dem Fahrzeug herfahrenden weiteren Fahrzeug eine Kollision mit diesem weiteren Fahrzeug vermeiden zu können.

Nachfolgend wird ein Ausführungsbeispiel des Verfahrens näher erläutert.

Unter der Voraussetzung, daß beide objekterfassenden Sensoren 51, 52 in gewissen Grenzen gleiche Signale für den Abstand und die Relativgeschwindigkeit des frontalen Hindernisses erfassen und unter der Voraussetzung, daß keine Fahreraktivität, d.h. keine Betätigung des Fahrtrichtungsanzeigers sowie der Pedale erfolgt, ergibt sich als Auslösekriterium der automatischen Vollbremsung mit den folgenden Definitionen

| | |
|---|---|
| Fg1: | Fahrzeug 1 (Vordermann) |
| Fg2: | Fahrzeug 2 (Eigenfahrzeug) |
| v1: | Geschwindigkeit von Fg1 |
| v2: | Geschwindigkeit von Fg2 |
| a1: | Beschleunigung von Fg1 |
| a2: | Beschleunigung von Fg2 |
| a2_max: | Maximales Bremsvermögen von Fg2 (abhängig von Witterung, Straßenzustand, Reifenzustand, ...) |
| v_rel: | Relativgeschwindigkeit zwischen Fg1 und Fg2 (= v2 - v1) |
| T_ansprech: | Ansprechzeit der Bremse von Fg2 |
| T_verzögerung: | Maß für verzögerte Auslösung der Vollbremsung |
| D: | <u>Ständig gemessener</u> Ist-Abstand zwischen Fg1 und Fg2 |
| D_brems: | <u>Ständig berechneter</u> mindestens erforderlicher Abstand zwischen Fg1 und Fg2, um durch Vollbremsen einen Umfall vermeiden zu können |
| D_lenk: | <u>Ständig berechneter</u> mindestens erforderlicher Abstand zwischen Fg1 und Fg2, um durch Vorbeilenken einen Unfall vermeiden zu können: |

$$D < D\_brems \text{ und } D < D\_lenk,$$

wobei

$$D\_Brems = [(v\_rel)^2/(2 \cdot (a1 - a2\_max)) + v\_rel \cdot T\_ansprech]$$

mit

$$a2\_max = a2\_max - 0.001 \text{ m/s}^2, \text{ wenn } a2\_max = a1.$$

Eine verzögerte Auslösung findet statt, wenn Aktivitäten des Fahrers erfaßt werden. Eine Vollbremsung findet in diesem Falle bei kleineren Ist-Abständen statt, nämlich, wenn

$$D < D\_brems - v\_rel \cdot T\_verzögerung$$

und

$$D < D\_lenk - v\_rel \cdot T\_verzögerung.$$

Eine solche verzögerte Auslösung findet unter den folgenden Voraussetzungen statt:

1. Nur ein objekterfassender Sensor 51 oder 52 liefert die Werte für Abstand und Relativgeschwindigkeit, die gemäß den oben dargestellten Auslösekriterien eine Notbremsung erfordern (= Fahrzeuge überdecken sich nur etwa zur Hälfte) oder

2. der Fahrtrichtungsanzeiger wird betätigt und das Gaspedal wird bis zu einem bestimmten Schwellenwert durchgetreten, was durch Schalter und Sensoren, beispielsweise Winkelsensoren erfaßbar ist oder

3. der Fahrtrichtungsanzeiger wird betätigt und es wird ein vorgegebener Lenkwinkel überschritten oder

4. das Bremspedal wird bis zu einem bestimmten Schwellenwert betätigt.

In diesem Falle werden D_brems und D_lenk verkleinert, da angenommen werden muß, daß der Fahrer in der Lage ist, Gefahrensituationen zu meistern.

Zeitlich vor der Auslösung der Notbremsung werden vorteilhafterweise die Bremsleuchten des Fahrzeugs eingeschaltet, so daß die Führer von Folgefahrzeugen auf die Gefahrensituation frühzeitig hingewiesen werden.

Die Berechnung von D_lenk kann als einfachste Näherung beispielsweise aufgrund folgender Formel berechnet werden:

$$D\_lenk = v\_rel \cdot T\_lenk,$$

die Zeit T_lenk bedeutet dabei die Zeit, in der das Lenkrad betätigt wird. Es versteht sich, daß weitere Fahrzeugund Fahrzustandselemente Daten zur Berechnung von D_lenk herangezogen werden können.

In der zentralen Steuer- und Recheneinheit 60 wird die maximale Bremsverzögerung bis zu einer Relativgeschwindigkeit des Werts Null in Abhängigkeit von den von den Sensoren erfaßten Signalen berechnet.

Die obenerwähnten Sensoren, beispielsweise die Sensoren 10 zur Erfassung der Geschwindigkeit und Beschleunigung des Fahrzeugs können gleichzeitig auch für weitere Zwecke, beispielsweise für Antiblockiersysteme o. dgl. verwendet werden.

Die obige Beschreibung bezieht sich auf ein Ausführungsbeispiel der Erfindung, das bei Landfahrzeugen, zum Beispiel bei Lastkraftwägen, Bussen oder Personenkraftwägen eingesetzt wird. Das der Erfindung zugrundeliegende Verfahren und die der Erfindung zugrundeliegende Vorrichtung nicht auf den Einsatz bei Landfahrzeugen beschränkt, sondern - gegebenenfalls in leicht modifizierter Form - auch bei anderen Fahrzeugen, wie Schienenfahrzeugen, Wasserfahrzeugen und Luftfahrzeugen einsetzbar.

## Patentansprüche

1. Verfahren zur Verhinderung einer Kollision eines Fahrzeugs mit einem vor dem Fahrzeug angeordneten Hindernis, vorzugsweise mit einem vor dem Fahrzeug fahrenden weiteren Fahrzeug, wobei man den Abstand zwischen dem Fahrzeug und dem Hindernis und die Differenz der Geschwindigkeiten des Fahrzeugs und des Hindernisses, die als Relativgeschwindigkeit bezeichnet wird, sowie die Geschwindigkeit und die Beschleunigung/Verzögerung des Fahrzeugs erfaßt und abhängig hiervon einen Kollisionshinweis und/oder einen Bremsvorgang auslöst, **dadurch**

**gekennzeichnet, daß** man die Fahreraktivität, den Zustand *der* Fahrbahn, den Beladungszustand und den Überdeckungsgrad des Fahrzeugs relativ zu dem Hindernis erfaßt, hieraus einen ersten Abstand zwischen dem Fahrzeug und dem Hindernis berechnet, der mindestens erforderlich ist, um durch einen Bremsvorgang mit maximaler Verzögerung eine Kollision des Fahrzeugs mit dem Hindernis zu vermeiden, daß man einen zweiten Abstand berechnet, der mindestens erforderlich ist, um durch Vorbeilenken des Fahrzeugs an dem Hindernis eine Kollision des Fahrzeugs mit dem Hindernis zu vermeiden, und daß man einen automatischen Bremsvorgang nur dann einleitet, wenn der erfaßte Abstand sowohl kleiner als der erste berechnete als auch kleiner als der zweite berechnete Abstand ist und wenn der Überdeckungsgrad eine vorgegebene Schwelle überschreitet.

2. Verfahren nach Anspruch 1, **dadurch gekennzeichnet, daß** man zur Erfassung der Fahreraktivität die Gaspedalbetätigung und/oder die Bremspedalbetätigung und/oder die Betätigung des Fahrtrichtungsanzeigers und/oder den Lenkwinkeleinschlag erfaßt.

3. Verfahren nach Anspruch 2, **dadurch gekennzeichnet, daß** die Größen "erster Abstand" und "zweiter Abstand" um ein vorgebbares Maß verkleinert werden, wenn

  a) sich die Fahrzeuge nur halb überdecken oder
  b) der Fahrtrichtungsanzeiger betätigt und das Gaspedal bis zu einem vorgebbaren Schwellenwert betätigt werden; oder
  c) der Fahrtrichtungsanzeiger betätigt wird und ein vorgegebener Lenkwinkel überschritten wird oder
  d) das Bremspedal bis zu einem vorgebbaren Schwellenwert betätigt wird.

4. Verfahren nach einem der Ansprüche 1 bis 3, **dadurch gekennzeichnet, daß** man das Fahrzeug mit maximaler Verzögerung solange abbremst, bis die Relativgeschwindigkeit den Wert Null annimmt.

5. Verfahren nach einem der Ansprüche 1 bis 4, **dadurch gekennzeichnet, daß** vor Einleitung des automatischen Bremsvorgangs die Bremsleuchten des Fahrzeugs eingeschaltet werden.

6. Bremsvorrichtung für ein Fahrzeug umfassend wenigstens einen objekterfassenden Sensor (51, 52) zur Erfassung des Abstands zwischen dem Fahrzeug und einem vor dem Fahrzeug angeordneten Hindernis, vorzugsweise einem vor dem Fahrzeug herfahrenden weiteren Fahrzeug, und der Differenz der Geschwindigkeiten des Fahrzeugs und des Hindernisses, die als Relativegeschwindigkeit bezeichnet wird, eine zentrale Steuereinheit (60), welche abhängig von den von den Sensoren erfaßten Signalen selbsttätig eine Bremse (70) betätigt, **dadurch gekennzeichnet, daß** wenigstens ein Sensor zur Erfassung der Fahreraktivität, wenigstens ein Sensor zur Erfassung des Überdeckungsgrads des Fahrzeugs relativ zu dem Hindernis, wenigstens ein Sensor (30) zur Erfassung des Beladungszustands, und wenigstens ein Sensor (40) zur Erfassung des Straßenzustands vorgesehen sind, deren Ausgangssignale der zentralen Steuereinheit (60) zur Auslösung eines Bremsvorgangs und Berechnung einer maximalen Bremsverzögerung in Abhängigkeit von den von den Sensoren ausgegebenen Signalen zugeführt werden, dann, wenn der von den Sensoren zur Erfassung des Abstands zwischen dem Fahrzeug und dem vor dem Fahrzeug angeordneten Hindernis (51, 52) erfaßte Abstand sowohl kleiner ist als ein erster berechneter Abstand zwischen dem Fahrzeug und dem Hindernis, der mindestens erforderlich ist, um durch einen Bremsvorgang mit maximaler Verzögerung eine Kollision des Fahrzeugs mit dem Hindernis vermeiden zu können, als auch kleiner ist als ein zweiter berechneter Abstand , der mindestens erforderlich ist, um durch Vorbeilenken des Fahrzeugs an dem Hindernis eine Kollision des Fahrzeugs mit dem Hindernis vermeiden zu können und wenn der durch die Sensoren zur Erfassung des Überdeckungsgrads (51, 52) erfaßte Überdekkungsgrad eine vorgegebene Schwelle überschreitet.

7. Bremsvorrichtung nach Anspruch 6, **dadurch gekennzeichnet, daß** die Sensoren zur Erfassung der Fahreraktivität Sensoren zur Erfassung der Bremspedalbetätigung und/oder Sensoren zur Erfassung der Gaspedalbetätigung und/oder Sensoren zur Erfassung der Betätigung des Fahrtrichtungsanzeigers und/oder Sensoren zur Erfassung des Lenkwinkeleinschlags sind.

8. Bremsvorrichtung nach Anspruch 6 oder 7, **dadurch gekennzeichnet, daß** der Sensor zur Erfassung des Abstands und der Relativgeschwindigkeit und der Sensor zur Erfassung des Überdeckungsgrads zwei an der Vorderseite des Fahrzeugs beabstandet angeordnete Radarsensoren (51, 52) sind.

9. Bremsvorrichtung nach einem der Ansprüche 6 bis 8, **dadurch gekennzeichnet, daß** die Bremse eine elektronisch ansteuerbare Druckluftbremse ist.

**Claims**

1. Method for the prevention of a collision of a vehicle with an obstacle arranged in front of said vehicle, preferably with a further vehicle driving in front of said vehicle, involving the detection of the distance between the vehicle and the obstacle, of the difference between the speeds of the vehicle and the obstacle defined as relative speed and of the acceleration/deceleration of the vehicle, and the initiation of a collision warning and/or braking process in dependence on these values, **characterised in that** driver activity, the state of the roads the loading of the vehicle and the degree of overlap of the vehicle in relation to the obstacle are detected, **in that** from these data a first distance between the vehicle and the obstacle is calculated, this being the minimum distance required to avoid a collision of the vehicle with the obstacle by means of a braking process with maximum deceleration, **in that** a second distance is calculated, this being the minimum distance required to avoid a collision of the vehicle with the obstacle by means of steering the vehicle past the obstacle, and **in that** an automatic braking process is initiated only if the detected distance is smaller than both the first and the second calculated distances and the degree of overlap exceeds a preset threshold value.

2. Method according to claim 1, **characterised in that** driver activity is detected by detecting the operation ofthe accelerator and/or the brake pedal and/or the operation of the direction indicators and/or the steering angle.

3. Method according to claim 2, **characterised in that** the values for "first distance" and "second distance" are reduced by a presettable amount, if

   a) the vehicles only partly overlap, or
   b) the direction indicators are operated and the accelerator is depressed to a presettable threshold value, or
   c) the direction indicators are operated and a preset steering angle is exceeded, or
   d) the brake pedal is depressed to a presettable threshold value.

4. Method according to any of claims 1 to 3, **characterised in that** the vehicle is braked with maximum deceleration until the relative speed becomes zero.

5. Method according to any of claims 1 to 4, **characterised in that** the brake lights of the vehicle are switched on before the automatic braking process is initiated.

6. Braking device for a vehicle comprising at least one object-detecting sensor (51, 52) for the detection of the distance between the vehicle and an obstacle arranged in front of said vehicle, preferably a further vehicle driving in front of said vehicle, and of the difference between the speeds of the vehicle and the obstacle defined as relative speed, and a central control unit (60) automatically applying a brake (70) in dependence on the signals detected by the sensors, **characterised in that** there are provided at least one sensor for the detection of driver activity, at least one sensor for the detection of the degree of overlap of the vehicle in relation to the obstacle, at least one sensor (30) for the detection of the loading conditions and at least one sensor (40) for the detection of the state of the road, their output signals being fed to the central control unit (60) to initiate a braking process and the calculation of a maximum braking deceleration in dependence on the signals output by the sensors whenever the distance detected by the sensors for the detection of the distance between the vehicle and the obstacle arranged in front of the vehicle (51, 52) is smaller than both a first calculated distance between the vehicle and the obstacle, this being the minimum distance required to avoid a collision of the vehicle with the obstacle by means of a braking process with maximum deceleration, and a second calculated distance, this being the minimum distance required to avoid a collision of the vehicle with the obstacle by means of steering the vehicle past the obstacle, and whenever the degree of overlap detected by the sensors for the detection of overlap (51, 52) exceeds a preset threshold value.

7. Braking device according to claim 6, **characterised in that** the sensors for the detection of driver activity are sensors for the detection of brake pedal operation and/or accelerator operation and/or sensors for the detection of the operation of the direction indicators and/or sensors for the detection of the steering angle.

8. Braking device according to claim 6 or 7, **characterised in that** the sensor for the detection of distance and relative speed and the sensor for the detection of the degree of overlap are two radar sensors (51, 52) mounted at a distance from each other on the front of the vehicle.

9. Braking device according to any of claims 6 to 8, **characterised in that** the brake is an electronically controlled air brake.

**Revendications**

1. Procédé pour empêcher une collision d'un véhicule avec un obstacle situé devant le véhicule, de préférence un autre véhicule se déplaçant devant le véhicule, selon lequel on détecte la distance entre le véhicule et l'obstacle et la différence des vitesses du véhicule et de l'obstacle, qui est désignée en tant que vitesse relative, ainsi que la vitesse et l'accélération/la décélération du véhicule et on déclenche, en fonction de cela, une indication de collision et/ou un processus de freinage, **caractérisé en ce qu'**on détecte l'activité du conducteur, l'état de la chaussée, l'état du chargement et le degré de chevauchement du véhicule par rapport à l'obstacle, on calcule à partir de là une première distance entre le véhicule et l'obstacle, qui est nécessaire au minimum pour éviter, au moyen d'un processus de freinage avec une décélération maximale, une collision du véhicule avec l'obstacle, qu'on calcule une seconde distance, qui est nécessaire au minimum pour, en déviant par braquage le véhicule, à proximité de l'obstacle, éviter une collision du véhicule avec l'obstacle, et qu'on déclenche un processus de freinage automatique uniquement lorsque la distance détectée est inférieure aussi bien à la première distance calculée qu'à la seconde distance calculée et lorsque le degré de chevauchement dépasse un seuil prédéterminé.

2. Procédé selon la revendication 1, **caractérisé en ce que** pour détecter l'activité du conducteur, on détecte l'actionnement de la pédale d'accélérateur et/ou l'actionnement de la pédale de frein et/ou l'actionnement de l'indicateur de la direction de déplacement et/ou l'angle de braquage .

3. Procédé selon la revendication 2, **caractérisé en ce que** les grandeurs "première distance" et "deuxième distance" sont réduites d'une valeur pouvant être prédéterminée lorsque

   a) les véhicules se recouvrent seulement à moitié, ou
   b) l'indicateur de direction de déplacement est actionné et la pédale d'accélérateur est actionnée juaqu'à une valeur de seuil pouvant être prédéterminée, ou
   c) l'indicateur de direction de déplacement est actionné et un angle de braquage prédéterminé est dépassé, ou
   d) la pédale de frein est actionnée jusqu'à une valeur de seuil pouvant être prédéterminée.

4. Procédé selon l'une des revendications 1 à 3, **caractérisé en ce qu'**on freine le véhicule avec une décélération maximale jusqu'à ce que la vitesse relative prenne la valeur zéro.

5. Procédé selon l'une des revendications 1 à 4, **caractérisé en ce qu'**avant le déclenchement du processus de freinage automatique, les feux stop du véhicule sont activés.

6. Dispositif de freinage pour un véhicule automobile comprenant au moins un capteur (51,52) détectant des objets, servant à détecter la distance entre le véhicule et un obstacle situé devant le véhicule, de préférence un autre véhicule se déplaçant en avant du véhicule, et la différence des vitesses du véhicule et de l'obstacle, qui est désignée comme étant la vitesse relative, est envoyée à une unité de commande centrale (60), qui actionne automatiquement un frein (70) en fonction des signaux détectés par les capteurs, **caractérisé en ce qu'**il est prévu au moins un capteur pour détecter l'activité du conducteur, au moyen un capteur pour détecter le degré de chevauchement du véhicule par rapport à l'obstacle, au moins un capteur (30) pour détecter l'état de charge, et au moins un capteur (40) pour détecter l'état de la chaussée, dont les signaux de sortie sont envoyés à l'unité de commande centrale (60) pour déclencher un processus de freinage et calculer une décélération de freinage maximale en fonction des signaux délivrés par les capteurs, lorsque la distance détectée par les capteurs servant à détecter la distance entre le véhicule et l'obstacle (51,52) disposé en avant du véhicule, est inférieure aussi bien à une première distance calculée entre le véhicule et un obstacle, qui est nécessaire au minimum pour pouvoir éviter, au moyen du processus de freinage avec une décélération maximale, une collision du véhicule avec l'obstacle, qu'à une seconde distance calculée qui est nécessaire au minimum pour éviter, au moyen d'un braquage du véhicule près de l'obstacle, une collision du véhicule avec l'obstacle, et lorsque le degré de chevauchement détecté par les capteurs servant à détecter le degré de chevauchement (51,52) dépasse un seuil prédéterminé.

7. Dispositif de freinage selon la revendication 6, **caractérisé en ce que** les capteurs servant à détecter l'activité du conducteur sont des capteurs servant à détecter l'actionnement de la pédale d'accélérateur et/ou des capteurs servant à détecter l'actionnement de la pédale d'accélérateur et/ou des capteurs servant à détecter l'actionnement de l'indicateur de changement de direction et/ou des capteurs servant à détecter la valeur de l'angle de braquage.

8. Dispositif de freinage selon la revendication 6 ou 7, **caractérisé en ce que** le capteur servant à détecter la distance et la vitesse relatives et le capteur servant à détecter le degré de chevauchement sont deux capteurs de radars (51,52) disposés à distance sur le côté avant du véhicule.

9. Dispositif de freinage selon l'une des revendications 6 à 8, **caractérisé en ce que** le frein est un frein à air comprimé pouvant être commandé par voie électronique.

Figur